# EUROPÄISCHE PATENTSCHRIFT

(11) **EP 2 896 851 B1**
(45) Veröffentlichungstag und Bekanntmachung des Hinweises auf die Patenterteilung: **30.05.2018**
(21) Anmeldenummer: 15151375.1
(22) Anmeldetag: 16.01.2015
(51) Int. Cl.: F16D 65/18

(54) **Scheibenbremse für ein Nutzfahrzeug**
Disc brake for a commercial vehicle
Frein à disque pour un véhicule utilitaire

(30) Priorität: 20.01.2014 DE 102014100561
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: Klingner, Matthias, 82272 Moorenweis (DE); Weber, Ralf, 80992 München (DE)

(56) Entgegenhaltungen:
- EP-A2- 2 647 865
- DE-A1- 10 236 606
- JP-A- 2010 096 196
- US-A1- 2013 308 888

## Beschreibung

Die Erfindung betrifft eine Scheibenbremse für ein Nutzfahrzeug nach dem Oberbegriff des Anspruchs 1.

Bei einer solchen Scheibenbremse wird die Zuspanneinrichtung beispielsweise pneumatisch betätigt, d.h., die Zuspannkraft wird über einen mit dem Bremshebel in Wirkverbindung stehenden pneumatisch beaufschlagten Bremszylinder erzeugt. Prinzipiell kann die Zuspannkraft auch hydraulisch oder elektromechanisch aufgebracht werden.

Um eine ausreichende, auf die Bremsscheibe wirkende Bremskraft zu erzielen, dient der Bremshebel als mechanische Übersetzung, wobei sich einerseits ein endseitig an den Bremshebel angeformter Exzenter an einem Lagersitz des Bremssattels gleitend abstützt, während andererseits der Bremshebel an einer bewegbaren Brücke anliegt.

Beim Verschwenken des Bremshebels gleitet der Exzenter entlang einer kreisbogenförmigen Bahn des Lagersitzes unter Verschiebung der Brücke in Richtung einer Bremsscheibe.

Zur Minimierung der Reibung zwischen dem Exzenter und dem Lagersitz sind zwischen beiden Wälzrollenlager in Form von Nadel- oder Zylinderrollenlager vorgesehen.

Ein solches Wälzrollenlager ist beispielsweise in der DE 10 2004 031 792 A1 offenbart. Der darin ausgewiesene Käfig des Wälzrollenlagers ist mit Aussparungen versehen, in denen Nadeln gehalten sind. Dabei bilden die Nadeln und der Käfig eine Baueinheit, die vormontiert und montagefertig zur Installation im Bremssattel vorliegt. Ebenso die Außenschale, die seitlich von Aufkantungen des Käfigs überdeckt ist. Hierzu sind Ausnehmungen in den Kantenbereichen der Außenschale vorgesehen, in die die diesen gegenüber in Schwenkrichtung kürzeren Aufkantungen des Käfigs eingreifen, so dass der Schwenkweg des Käfigs gegenüber der Außenschale begrenzt ist.

Probleme ergeben sich jedoch dann, wenn ein sogenanntes vollrolliges Nadellager Verwendung findet, das sich aufgrund der maximal möglichen Anzahl von Nadeln durch eine optimierte Tragfähigkeit auszeichnet und bei dem die Nadeln mantelseitig aneinander liegen.

Allerdings gestaltet sich die Montage eines solchen Wälzlagers sehr problematisch, da der Käfig lediglich dazu geeignet ist, die Nadeln beim Verschwenken des Käfigs mitzuführen, ohne diese jedoch in jeder Richtung zu halten, so dass eine Vorfertigung im Sinne der Herstellung eines Bauteiles, bestehend aus Käfig und Nadeln nicht möglich ist.

In der DE 10 2005 034 739 A1 wird deshalb vorgeschlagen, den Käfig und die Nadeln eines vollrolligen Nadellagers zwischen der Außenschale und einer Innenschale zu positionieren, wobei beide miteinander verbunden werden, so dass das insoweit komplettierte Wälzrollenlager als vormontierte Baueinheit vorliegt.

Jedoch ist diese Konstruktion aus verschiedenen Gründen als nachteilig anzusehen. So ist vor allem der relativ hohe Fertigungsaufwand zu nennen, der das Produkt erheblich verteuert und damit einer stets angestrebten Kostenoptimierung entgegensteht.

Dies trifft gleichermaßen auf den durch die Bereitstellung der Innenschale erhöhten Materialeinsatz zu.

In der US 2013/0308888 A1 sind eine Scheibenbremse und ein kreisbogenförmiges Wälzlager gemäß der Gattung offenbart, wobei der Käfig des Wälzlagers und die Außenschale in radialer Richtung formschlüssig miteinander verbunden sind, während eine Käfigrückführung durch abgewinkelte Laschen der Außenschale den Käfig bei einem Zurückschwenken des Bremshebels in eine Ausgangsposition führt.

Aus der JP 2010 096 196 A ist ein als Wälzlager ausgebildetes Schwenklager bekannt, das zur Lagerung einer Taumelscheibe einer Hochdruck-Plungerpumpe Verwendung findet. Dabei weist die Außenschale an radial vorstehenden Längsrändern Ausschnitte auf, in die zur Schwenkwinkelbegrenzung des Käfigs daran angeformte Vorsprünge angreifen.

Der Erfindung liegt die Aufgabe zugrunde, eine Scheibenbremse der gattungsgemäßen Art so weiterzuentwickeln, dass sie einfacher und kostengünstiger herstellbar ist und das mindestens eine darin angeordnete Wälzlager problemlos montierbar ist.

Diese Aufgabe wird durch eine Scheibenbremse mit den Merkmalen des Anspruchs 1 und ein Wälzlager mit den Merkmalen des Anspruchs 3 gelöst.

Durch die konstruktive Ausgestaltung des Wälzlagers entsprechend der Erfindung ist dessen Vormontage möglich, wobei die Wälzrollen, namentlich die Nadeln, in jeder Richtung sicher gehalten werden.

Darüber hinaus zeichnet sich das neue Wälzlager auch dadurch aus, dass es mit geringem Fertigungsaufwand und Materialeinsatz zur realisieren ist, letzteres insbesondere deshalb, weil auf den Einsatz einer aus dem vorbeschriebenen Stand der Technik bekannten Innenschale verzichtet werden kann, ebenso wie auf weitere separate Bauteile.

Der Käfig ebenso wie die Außenschale sind durch einfache, unkomplizierte Fertigungsverfahren herzustellen, beispielsweise durch Biegen und/oder Umformen bzw. der Käfig als Kunststoff-Spritzgussteil, was naturgemäß zu einer kostengünstigen Herstellung führt.

Auch die Montage des Wälzlagers im Bremssattel gestaltet sich äußerst einfach und ist mit geringem Aufwand und in kurzer Zeit zu bewerkstelligen.

Dies ist insofern bemerkenswert, als solche Wälzlager in großen Stückzahlen Verwendung finden.

Entsprechend der Erfindung weist der Käfig an seinen sich gegenüberliegenden gekrümmten Längskanten jeweils mindestens einen Fensterausschnitt auf, in den ein an der zugeordneten Kante der Außenschale vorgesehener Vorsprung eingreift. Dabei begrenzt der Vorsprung in Korrespondenz mit dem Fensterausschnitt den Schwenkweg des Käfigs. d.h., der Vorsprung bildet einen Anschlag in beide Schwenkrichtungen.

Alternativ dazu können in Richtung des Käfigs abgewinkelte gekrümmte Längskanten der Außenschale jeweils mit einem Fensterausschnitt versehen sein, in den dann ein Vorsprung an der zugeordneten Kante des Käfigs im vorbeschriebenen Sinn eingreift.

Zur leichteren Montage, d.h. zum Verbinden des Käfigs mit der Außenschale ist im äußeren, der Außenschale zugewandten Randbereich des Fensterausschnitts ein diesen begrenzender Steg gebildet, der in Richtung der Wälzrollen elastisch verformbar ist, so dass der Vorsprung beim Anbringen der Außenschale diesen Steg überfahren kann, unter dessen Verformung, die sich nach Einrasten des Vorsprungs in den Fensterausschnitt rückbildet.

Bevorzugt ist die Außenschale im Querschnitt U-förmig ausgebildet, wobei die beiden sich gegenüberliegenden, die abgewinkelten Längskanten bildenden Schenkel außenseitig die zugeordneten Längskanten des Käfigs in radialer Richtung bereichsweise und mit geringem Spiel überdecken, so dass ein insoweit behinderungsfreies Verschwenken des Käfigs gegenüber der Außenschale gewährleistet ist.

Im Übrigen kann der Fensterausschnitt als offener Durchbruch gestaltet sein oder lediglich als Ausnehmung, d.h. als Vertiefung mit geschlossenem Boden.

Letzteres bietet gegenüber einem offenen Durchbruch eine höhere Stabilität der Längskante, die bei dem Käfig Teil des umfänglich geschlossenen Rahmens ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen schematischen Aufbau einer Scheibenbremse in einem Querschnitt
- Figur 2: ein Wälzlager nach der Erfindung als Einzelheit in einer Explosionsdarstellung
- Figuren 3 und 4: das Wälzlager in jeweils unterschiedlichen Funktionsstellungen in perspektivischer Ansicht
- Figur 5: das Wälzlager in einer Draufsicht
- Figur 6: einen Schnitt durch das Wälzlager gemäß X-X nach Figur 5.

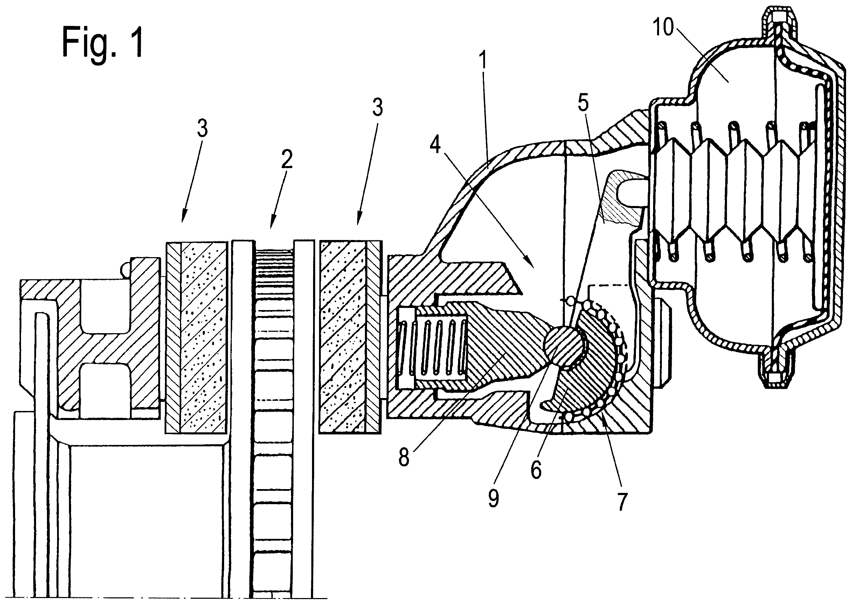

In der Figur 1 ist in schematischer Darstellung eine Scheibenbremse für ein Fahrzeug, insbesondere ein Nutzfahrzeug in einem Halbschnitt dargestellt, die eine Bremsscheibe 2 aufweist, die an einer nicht gezeigten Achse des Nutzfahrzeuges befestigt ist und von einem Bremssattel 1 übergriffen ist, der in Richtung der Bremsscheibe 2 verschiebbar sein kann.

Im Bremssattel 1 ist eine Zuspanneinrichtung 4 angeordnet, mit der bei einer über einen vorzugsweise pneumatisch betätigbaren Bremszylinder 10 ausgelösten Bremsung Bremsbeläge 3 an die Bremsscheibe 2 drückbar sind.

Hierzu greift die Zuspanneinrichtung 4 an zwei nicht dargestellte, parallel und mit Abstand zueinander in einer Brücke 8 angeordneten Stellspindeln an.

Die Zuspanneinrichtung 4 weist einen Bremshebel 5 auf, der mit dem Bremszylinder 10 in Wirkverbindung steht und bei dessen Betätigung in Richtung der Bremsscheibe 2 schwenkbar um eine Wälzrolle 9 ist, die parallel zur Ebene der Bremsscheibe 2 verläuft und in der Brücke 8 gelagert ist.

Im Bremssattel 1 sind kreisbogenförmige Wälzlager 7 vorgesehen, an denen sich der in diesem Bereich als Exzenter 6 ausgebildete Bremshebel 5 abstützt.

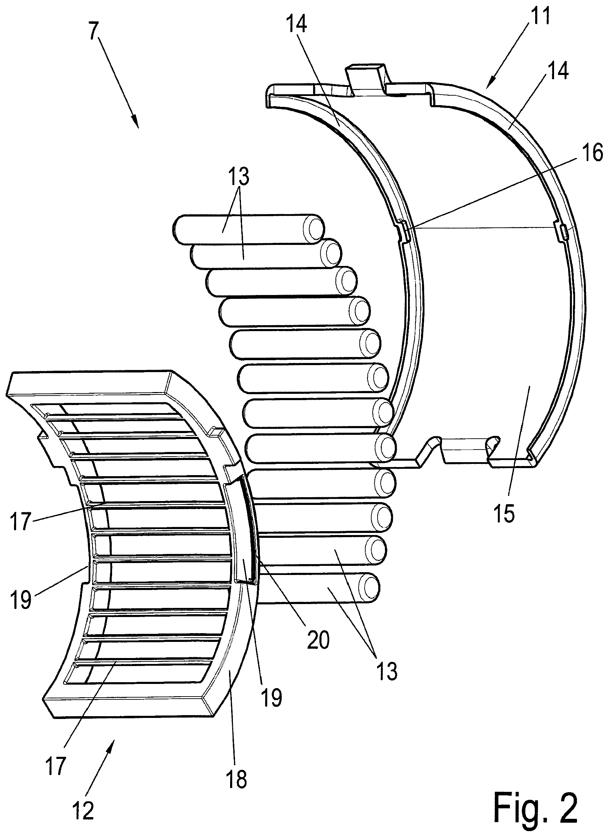

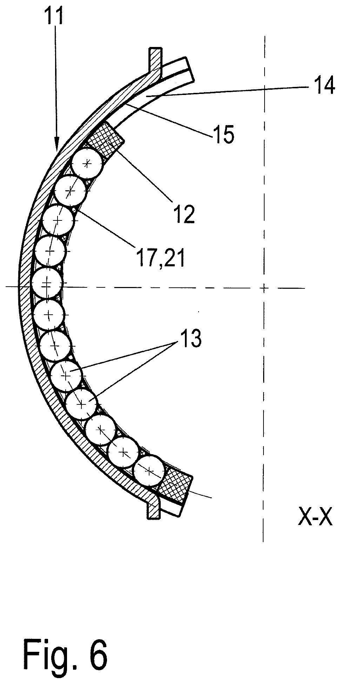

Ein solches kreisbogenförmiges Wälzlager 7 ist in den Figuren 2-6 als Einzelheit gezeigt. Dabei ist das Wälzlager 7 im Beispiel als vollrolliges Nadellager ausgebildet, mit einer Außenschale 11 und einer Mehrzahl von mantelseitig aneinander liegenden Wälzrollen 13, (Fig. 6) hier in Form von Nadeln, die quer zur Schwenkrichtung des Bremshebels 5 angeordnet sind und sich an der konkaven Innenfläche 15 der Außenschale 11 abstützen.

Die Wälzrollen 13 sind in einem Käfig 12 gehalten, der umfänglich einen Rahmen aufweist, mit zwei sich gegenüberliegenden Längskanten 18 und gleich gerichtet zu den Wälzrollen 13 die beiden Längskanten miteinander verbindenden Streben 17, die in einem jeweils zwischen zwei Wälzrollen 13 gebildeten Zwickel 21 einliegen, was besonders deutlich in der Figur 6 erkennbar ist.

Der Käfig 12 mit den gehaltenen Wälzrollen 13 ist begrenzt verschwenkbar mit der Außenschale 11 formschlüssig verbunden.

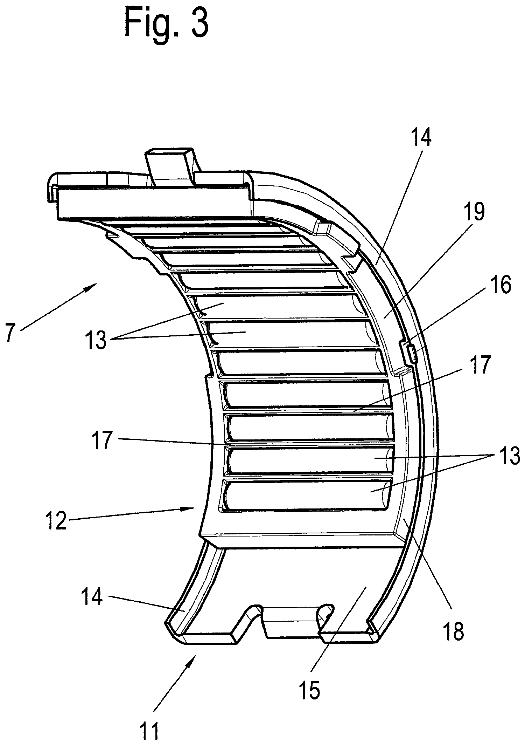

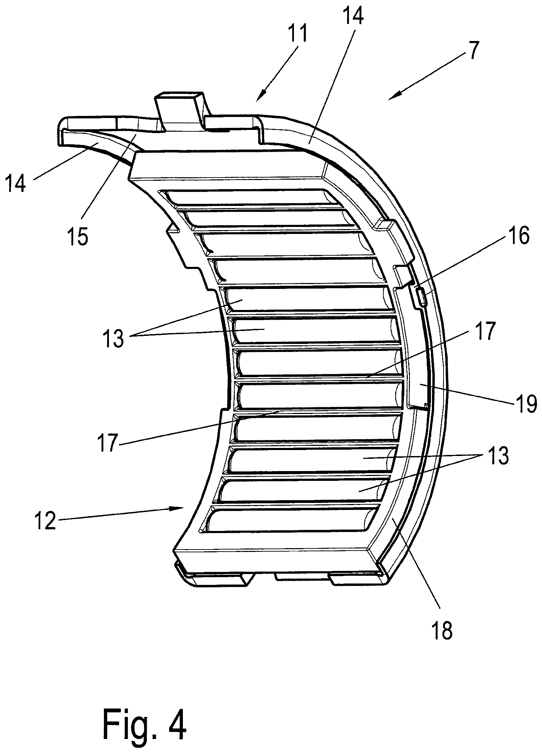

Hierzu weist der Käfig 12 an den beiden sich gegenüberliegenden Längskanten 18 außenseitig Fensterausschnitte 19 auf, in die, wie insbesondere die Figuren 3 und 4 wiedergeben, an abgewinkelte, den Längskanten 18 des Käfigs 12 zugeordnete Kanten 14 der Außenschale 11 angeformte Vorsprünge 16 eingreifen, wobei diese Vorsprünge 16 eine Begrenzung für die vorbestimmte Verschwenkung des Käfigs 12 bilden.

Die jeweilige Endstellung nach einer Verschwenkung des Käfigs 12 ist in den Figuren 3 und 4 dargestellt, wobei die Figur 3 eine obere Endstellung des Käfigs 12 und die Figur 4 eine untere Endstellung wiedergibt.

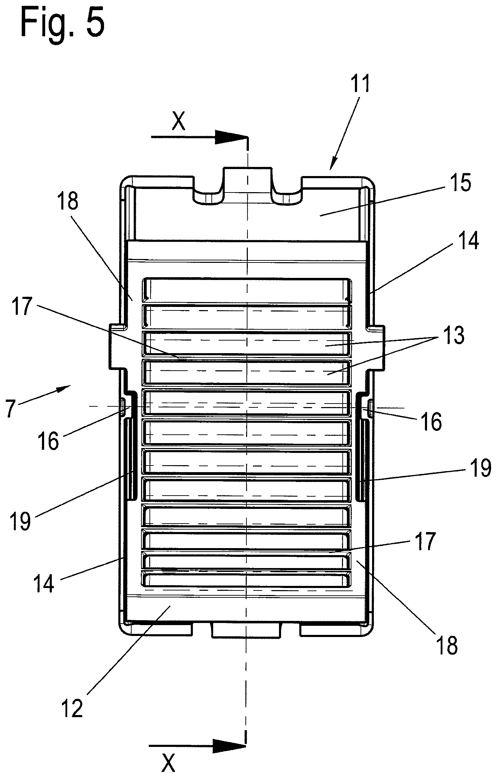

Weiter ist zu erkennen, auch aus der Figur 5, dass die Kanten 14 der Außenschale 11 die Längskanten 18 des Käfigs 12 im konvex gekrümmten Randbereich radial teilweise überdecken, d.h., die Außenschale 11 ist im Querschnitt U-förmig ausgebildet.

Der Fensterausschnitt 19 ist im Beispiel als zur konkaven Seite des Käfigs 12 hin offene Aussparung ausgebildet und gegenüberliegend, also im konvexen Randbereich, durch einen Steg 20 begrenzt, der dem konvexen Randbereich entsprechend verläuft.

Dieser Steg 20 ist so weit elastisch verformbar, dass bei einem Zusammenbau des Wälzlagers 7 der Vorsprung 16 den Steg 20 ohne weiteres überfahren kann, bei anschließender Rückstellung des Steges 20 aufgrund seiner Elastizität.

Wie erkennbar ist, sind die Längskanten 18 in ihrer Breite so dimensioniert, dass einerseits ein beidseitiger radialer Überstand der Wälzrollen 13 gewährleistet ist und andererseits deren ausreichende axiale Fixierung, wobei die Vorsprünge 16 an den jeweiligen Stegen 20 so anliegen, dass ein ungehindertes Verschwenken des Käfigs 12 gegenüber der Außenschale 11 gewährleistet ist.

## Patentansprüche

1. Scheibenbremse für ein Nutzfahrzeug, mit einer in einem Bremssattel (1) positionierten Zuspanneinrichtung (4), die einen Bremshebel (5) aufweist, der mittels mindestens eines kreisbogenförmigen Wälzlagers (7) im Bremssattel (1) schwenkbeweglich gelagert ist, wobei das Wälzlager (7) eine Außenschale (11) sowie eine Mehrzahl nebeneinander liegender, sich an der konkaven Innenseite (15) der Außenschale (11) abstützender Wälzrollen (13) aufweist, die in einem Käfig (12) gehalten sind, der gegenüber der Außenschale (11) begrenzt verschwenkbar ist, **dadurch gekennzeichnet, dass** die Außenschale (11), die Wälzrollen (13) und der Käfig (12) als vormontierte Baueinheit in den Bremssattel (1) eingesetzt sind, wobei der Käfig (12) und die Außenschale (11) formschlüssig miteinander verbunden sind und der Käfig (12) an seinen gegenüberliegenden, gekrümmten Längskanten (18) jeweils mindestens einen Fensterausschnitt (19) aufweist, an den ein an der zugeordneten Kante (14) der Außenschale (11) vorgesehener Vorsprung (16) eingreift oder der Käfig (12) an seinen sich gegenüberliegenden gekrümmten Längskanten (18) jeweils einen Vorsprung (16) aufweist, der in einen Fensterausschnitt an der zugeordneten Kante der Außenschale (11) eingreift, wobei der Vorsprung (16) in Korrespondenz mit dem Fensterausschnitt (19) den Schwenkweg des Käfigs (12) begrenzt.

2. Scheibenbremse nach Anspruch 1, **dadurch gekennzeichnet, dass** der Käfig (12) in Achsrichtung der Wälzrollen (13) die Längskanten (18) miteinander verbindende Streben (17) aufweist, die jeweils in einen zwischen zwei Wälzrollen (13) auf der der Außenschale (11) gegenüberliegenden Seite gebildeten Zwickel (21) eingreifen.

3. Kreisbogenförmiges Wälzlager zur Abstützung eines in einem Bremssattel (1) einer Scheibenbremse positionierten Bremshebels (5), wobei das Wälzlager (7) eine Außenschale (11) sowie eine Mehrzahl nebeneinander liegender, sich an der konkaven Innenseite (15) der Außenschale (11) abstützender Wälzrollen (13) aufweist, die in einem Käfig (12) gehalten sind, der gegenüber der Außenschale (11) begrenzt verschwenkbar ist, **dadurch gekennzeichnet, dass** der Käfig (12) mit der Außenschale (11) formschlüssig verbunden ist, wobei der Käfig (12) an seinen gegenüberliegenden, gekrümmten Längskanten (18) jeweils mindestens einen Fensterausschnitt (19) aufweist, an den ein an der zugeordneten Kante (14) der Außenschale (11) vorgesehener Vorsprung (16) eingreift oder der Käfig (12) an seinen sich gegenüberliegenden gekrümmten Längskanten (18) jeweils einen Vorsprung (16) aufweist, der in einen Fensterausschnitt (19) an der zugeordneten Kante (14) der Außenschale (11) angreift und der Vorsprung (16) in Korrespondenz mit dem Fensterausschnitt (19) den Schwenkweg des Käfigs (12) begrenzt.

4. Kreisbogenförmiges Wälzlager nach Anspruch 3, **dadurch gekennzeichnet, dass** der Fensterausschnitt (19) als offene Durchbrechung oder als bodenseitig geschlossene Ausnehmung ausgebildet ist.

5. Kreisbogenförmiges Wälzlager nach Anspruch 3 oder 4, **dadurch gekennzeichnet, dass** der Fensterausschnitt (19) im konvexen Randbereich der Längskante (18) des Käfigs (12) einen Steg (20) aufweist, der in Richtung der Wälzrollen (13) elastisch verformbar ist und der vom Vorsprung (16) hintergriffen ist.

6. Kreisbogenförmiges Wälzlager nach einem der Ansprüche 3-5, **dadurch gekennzeichnet, dass** die Außenschale (11) im Querschnitt U-förmig ausgebildet ist, wobei an die sich gegenüberliegenden, die Kanten (14) bildenden abgewinkelten Schenkel jeweils der Vorsprung (16) angeformt ist.

7. Kreisbogenförmiges Wälzlager nach einem der Ansprüche 3-6, **dadurch gekennzeichnet, dass** die Kanten (14) den Käfig (12) außenseitig im konvexen Randbereich in radialer Richtung teilweise überdecken.

8. Kreisbogenförmiges Wälzlager nach Anspruch 6 oder 7, **dadurch gekennzeichnet, dass** das Wälzlager als vollrolliges Nadellager ausgebildet ist.

## Claims

1. A disc brake for a utility vehicle comprising a brake application device (4) which is positioned in a brake calliper (1) and has a brake lever (5) that is mounted in the brake calliper (1) by means of at least one arc-shaped roller bearing (7) such that it is able to pivot, the roller bearing (7) having an outer shell (11) and a plurality of rollers that lie side by side supported on the concave inner face (15) of the outer shell (11) and are held in a cage (12) that can be pivoted to a limited extent in relation to the outer shell (11), **characterised in that** the outer shell (11), the rollers (13) and the cage (12) are introduced into the brake calliper (1) as a pre-assembled unit, the cage (12) and the outer shell (11) being connected together in a form fit and either the cage (12) having on each of its opposing, curved longitudinal edges (18) at least one window cut-out (19) in which engages a projection (16) provided on the corresponding edge (14) of the outer shell (11) or the cage (12) having on each of its opposing, curved longitudinal edges (18) a projection (16) that engages in a window cut-out on the corresponding edge of the outer shell (11), the projection (16) delimiting the course of pivoting of the cage (12) in correspondence with the window cut-out (19).

2. A disc brake according to claim 1, **characterised in that** the cage (12) has struts (17) that connect the longitudinal edges (18) with one another in the axial direction of the rollers (13) and that each strut (17) engages in a spandrel (21) formed between two rollers (13) on the side opposite the outer shell (11).

3. An arc-shaped roller bearing to support a brake lever (5) positioned in a brake calliper (1) of a disc brake, the roller bearing (7) having an outer shell (11) and a plurality of rollers (13) that lie side by side supported on the concave inner face (15) of the outer shell (11) and are held in a cage (12) that can be pivoted to a limited extent in relation to the outer shell (11), **characterised in that** the cage (12) is connected in a form fit to the outer shell (11), either the cage (12) having on each of its opposing, curved longitudinal edges (18) at least one window cut-out (19) in which engages a projection (16) provided on the corresponding edge (14) of the outer shell (11) or the cage (12) having on each of its opposing, curved longitudinal edges (18) a projection (16) that engages in a window cut-out (19) on the corresponding edge of the outer shell (11) and the projection (16) delimiting the course of pivoting of the cage (12) in correspondence with the window cut-out (19).

4. An arc-shaped roller bearing according to claim 3, **characterised in that** the window cut-out (19) is designed as a through opening or as a recess closed at its base.

5. An arc-shaped roller bearing according to claim 3 or 4, **characterised in that** the window cut-out (19) has a lug (20) in the convex edge region of the longitudinal edge (18) of the cage (12), said lug being elastically deformable in the direction of the rollers (13) and the projection (16) engaging behind it.

6. An arc-shaped roller bearing according to one claims 3 to 5, **characterised in that** the cross-section of the outer shell (11) is U-shaped in design, the projection (16) being formed onto each of the opposing angled legs which form the edges (14).

7. An arc-shaped roller bearing according to one of claims 3 to 6, **characterised in that** the edges (14) partially cover the cage (12) radially externally in the convex edge region.

8. An arc-shaped roller bearing according to claim 6 or 7, **characterised in that** the roller bearing is designed as a full-roller needle bearing.

## Revendications

1. Frein à disque pour un véhicule automobile, comprenant un dispositif (4) de serrage, qui est mis en position dans un étrier (1) de frein et qui a un levier (5) de frein, lequel est monté mobile en pivotement dans l'étrier (1) de frein, au moyen d'un palier (7) à roulement en forme d'arc de cercle, le palier (7) à roulement ayant une coque (11) extérieure ainsi qu'une pluralité de rouleaux (13) de roulement, qui sont les uns à côté des autres, qui s'appuient sur la face (15) intérieure concave de la coque (11) extérieure et qui sont maintenus dans une cage (12) pouvant pivoter de manière limitée par rapport à la coque (11) extérieure, **caractérisé en ce que** la coque (11) extérieure, les rouleaux (13) de roulement et la cage (12) sont insérés, en tant qu'unité de construction prémontée, dans l'étrier (1) de frein, la cage (12) et la coque (11) extérieure étant assemblées l'une à l'autre à complémentarité de forme et la cage (12) ayant, sur ses bords (18) longitudinaux incurvés opposés, respectivement au moins une découpe (19) en fenêtre, dans laquelle pénètre une saillie (16) prévue sur le bord (14) associé de la coque (11) extérieure, ou la cage (12) a, sur ses bords (18) longitudinaux incurvés opposés, respectivement une saillie (16), qui pénètre dans une découpe en fenêtre sur le bord associé de la coque (11) extérieure, la saillie (16) délimitant le trajet de pivotement de la cage (12) en correspondance avec la découpe (19) en fenêtre.

2. Frein à disque suivant la revendication 1, **caractérisé en ce que** la cage (12) a, dans la direction axiale des rouleaux (13) de roulement, des traverses (17), qui relient entre eux les bords (18) longitudinaux et qui pénètrent chacune dans un gousset (21) formé entre deux rouleaux (13) de roulement du côté opposé à la coque (11) extérieure.

3. Palier à roulement en forme d'arc de cercle pour soutenir un levier (5) de frein mis en position dans un étrier (1) d'un frein à disque, le palier (7) à roulement ayant une coque (11) extérieure ainsi qu'une pluralité de rouleaux (13) de roulement, qui sont disposés les uns à côté des autres, qui s'appuient sur la face (15) intérieure concave de la coque (11) extérieure et qui sont maintenus dans une cage (12) pouvant pivoter de manière limitée par rapport à la coque (11) extérieure,
**caractérisé en ce que** la cage (12) est assemblée à complémentarité de forme à la coque (11) extérieure, la coque (12) ayant, sur ses bords (18) longitudinaux incurvés opposés, respectivement au moins une découpe (19) en fenêtre, dans laquelle pénètre une saillie (16) prévue sur le bord (14) associé de la coque (11) extérieure, ou la cage (12) a, sur ses bords (18) longitudinaux incurvés opposés, respectivement une saillie (16), qui pénètre dans une découpe (19) en fenêtre sur le bord (14) associé de la coque (11) extérieure et la saillie (16) délimite le trajet de pivotement de la cage (12) en correspondance avec la découpe (19) en fenêtre.

4. Palier à roulement en forme d'arc de cercle suivant la revendication 3, **caractérisé en ce que** la découpe (19) en fenêtre est réalisée sous la forme d'un ajour ouvert ou d'un creux fermé du côté du fond.

5. Palier à roulement en forme d'arc de cercle suivant la revendication 3 ou 4, **caractérisé en ce que** la découpe (19) en fenêtre a, dans la partie de bord convexe du bord (18) longitudinal de la cage (12), un rebord (20) déformable élastiquement dans la direction des rouleaux (13) de roulement et pris par l'arrière par la saillie (16).

6. Palier à roulement en forme d'arc de cercle suivant l'une des revendications 3 à 5, **caractérisé en ce que** la coque (11) extérieure est en forme de U en section transversale, la saillie (16) étant formée respectivement sur les branches coudées opposées formant les bords (14).

7. Palier à roulement en forme d'arc de cercle suivant l'une des revendications 3 à 6, **caractérisé en ce que** les bords (14) recouvrent en partie, dans la direction radiale, la cage (12) du côté extérieur dans la partie de bord convexe.

8. Palier à roulement en forme d'arc de cercle suivant la revendication 6 ou 7, **caractérisé en ce que** le palier à roulement est constitué sous la forme d'un palier à aiguille à rouleaux pleins.
